# EUROPEAN PATENT SPECIFICATION

(11) **EP 2 722 132 B1**
(45) Date of publication and mention of the grant of the patent: **18.12.2019**
(21) Application number: 13189237.4
(22) Date of filing: 18.10.2013
(51) Int. Cl.: B25B 23/14, B60B 29/00, B25B 23/147

(54) **Power torque tool**
Drehmomentwerkzeug
Outil dynamométrique électrique

(30) Priority: 18.10.2012 EP 12189119
(43) Date of publication of application: 23.04.2014
(73) Proprietor: Torque and More (TAM) GmbH, 82319 Starnberg (DE)
(72) Inventor: May, Lutz, 82335 Berg (DE)
(74) Representative: KASTEL Patentanwälte PartG mbB

(56) References cited:
- EP-A2- 1 059 145
- EP-A2- 1 136 188
- EP-A2- 2 042 271
- EP-A2- 2 631 036
- WO-A1-92/18291
- US-A- 5 584 619

## Description

### Field of the invention

The invention relates to a power torque tool, in particular to a power torque tool for being used as a wheel gun, the power torque tool being in particular a pneumatic powered impact fastener.

### Technical Background

One advantage when using impact fasteners is that they are very powerful while the physical weight of the tool is relatively low in comparisons to other types of fastener tools. One disadvantage of impact fastener tools may be that it is difficult to control the power-output of such a tool. Meaning that is very easily possible to damage the screw or bolt by applying to high forces onto them.

It may be useful for the end-users of such a fastener tool to know in real-time the torque forces that the fastener is generating. Because of the physical nature of an impact fastener tool (cramped spaces) it may been very difficult to implement a real-time measuring torque sensor that can withstand the very high torque forces the tool can produce. Unfortunately, when the torque sensor has been integrated into the tool, it became obvious that the torque sensor was measuring the "torque" the tool generated with every impact pulse (which, in average last about 1 millisecond only), and was unable to measure the torque forces with which the screw or bolt are tightened with. The reason for this mishap is the physical phenomena of energy-transfer when momentums apply.

The solution to this challenge is to measure simultaneously the applied torque forces and the angular changes of the tools driving shaft. This way the sensor signal processing software can detect by when the bolt or the screw sits tight in its final place and when the stretching-procedure of the screw and bolt shaft begins.

Often an impact fastener tool is used to change the tires of passenger cars and large vehicles (like trucks, coaches, on off-highway vehicles, for example). In the motorsport market such impact fasteners are also called wheel guns. Particularly in motorsport applications the time spend to change a tire may be very important to know and to execute the whole tire-changing process as quickly as possible.

Besides changing very fast the tires of a vehicle it is also important to make sure that all the screws, bolts, and nuts, that are responsible to hold the wheel in place, have been tighten correctly to the manufacturers specifications.

Some or all of the following criteria may be important to meet: cross-threated nuts, meaning that the bolt or nut jams right at the beginning of the tightening process and actually is not tightened at all. A cross-threat nut, or the jammed nut will then fall-off very quickly afterwards; unbalanced tightening of the nuts or screws that hold the wheel in place, which can happen when more than one nut or screw is required to hold the wheel in place, and when some screws are tightened with higher torque forces than others. The risk may be that the "over-tightened" screws or bolts might break and that the wheel could "come-off"; undetected, the fastener user has not followed a given assembly procedure, meaning that the tool user has untightened and tightened the wheel-nuts in the wrong sequence and with this will not be able to reach the highest work-quality (the wheels are not mounted with the highest standard possible).

WO 92/18291 A1 describes a hand-held power tool in which the tool attachment is driven to rotate and in which the tool attachment is cut off from the drive if it jams suddenly. The gyro effect occurring in the motor is utilized to detect the occurrence of a jam. If the tool jams, the housing rotates as a result of an angular momentum in the motor.

### Summary of the invention

It may be seen as an object to provide a power torque tool which improves the fastening process of screws, in particular of wheel screws.

This object is solved by the subject matter of the independent claim. Further embodiments are contained in the dependent claims as well in the following description.

According to an aspect, a power torque tool is provided. The power torque tool comprises a motion sensor arrangement, wherein the motion sensor arrangement is mechanically attached to the power torque tool and wherein the motion sensor arrangement is adapted for sensing a motion of the power torque tool. The power torque tool further comprises a tool motion pattern receiving unit and a tool motion evaluation unit. The tool motion pattern receiving unit is adapted for receiving a predetermined tool motion pattern. The tool motion evaluation unit is adapted for evaluating whether the sensed spatial motion of the power torque tool corresponds to the received tool motion pattern and to communicate the result of the evaluation.

The power torque tool may comprise a housing and the motion sensor arrangement may be mechanically attached to the housing and can be arranged within or outside of the housing, in other words attached to an outer surface of the housing. The motion sensor arrangement may in particular be fixed immovable to the housing such that a motion of the power torque tool and of the housing is transmitted or conferred directly to the motion sensor arrangement.

Thus, the motion sensor arrangement enables detecting a movement of the power torque tool. As described above, when moving the power torque tool during an operation, i.e. when applying a torque to a screw, for example, the torque applied to the screw is not identical to the torque applied to a shaft of the power torque tool, wherein the shaft is adapted for applying a rotational movement to the screw.

The detected motion of the power torque tool can thus be used for determining the applied forces to a screw out of the initial torque force applied to the rotational shaft, a rotation angle of the rotational shaft and the motion of the power torque tool.

Out of the geometrical shape of the power torque tool and its weight, the torque force applied to the power torque tool for initiating a motion of the power torque tool can be determined. This torque force needs to be subtracted from the initial torque force applied to the rotational shaft as to determine the torque force applied by the rotational shaft to the screw.

Increasing the performance and safety to user and objects of wheel-guns (impact fastener tools to tighten and untighten the nuts and bolts when changing the wheel of a vehicle, for example) by implementing a motion sensor arrangement having a specific array of sensors and by using smart signal processing electronics to detect potential faults or when the targeted operational specifications (nut and bolt tightening process) has been achieved and completed correctly.

In one embodiment, the power torque tool as described above and hereinafter assumes that the following sensors are already in place (integrated into or attached to the power torque tool): angle sensor (measuring the incremental or absolute angle of the tools main drive shaft) and torque sensor (measuring the absolute torque forces the hammering (impact) tool is sending down the tools main drive shaft)
The power torque tool comprises a motion sensor arrangement, which motion sensor arrangement comprises the following sensors and their electronics in one embodiment: motion or movement detection sensors like accelerometers and/or gyros (measuring the absolute or relative movement of the tool in one or more than one axis: X, Y, and Z) and/or a microphone (detecting when the tool will be used and the torque hammering pulses have started, and/or when the hammering pulses actually take place.

In one embodiment, the electronics required to make the best use of these additional sensors is either built-in the power torque tool (which may be the most practical solution when using it in hand-held power torque tool devices), or can be placed elsewhere (outside of the power torque tool) in automated and industrial assembly fastener applications.

In one embodiment, the electronics consists of the modules: signal amplification, signal filtering (for the appropriate signal frequencies), and then signal processing by the use of micro processors or any type of data processing or computer power. While the sensors provide vital signal information, the signal processing electronics has to determine what these signals actually mean, when the fastener tool is in use.

In other words, to increase the work-quality performance of a wheel-gun, additional sensors will be integrated into the wheel-gun system that allows the detection of the potential abuse of the wheel-gun, or when the tool has been used inappropriately or even incorrect. These sensors monitor the tool performance and the way the user is operating the tool. In one embodiment, the output of the sensor system electronics will allow to drive warning lights and/or status lights, can trigger real-time actions to prevent or eliminate damages to user, tool, or the bolts and nuts, and can be logged for a more detailed analysis of the measurement results at a later time.

It is one aspect to add motion and position sensors (like accelerometers and gyros), and to use a microphone or an accelerometer with signal filtering to detect and quantify impact torque pulses. The motion and position sensors identify and quantify about how the user is holding the tool and what movements the user is making with this tool during the tools operation.

The use of gyros and accelerometers allows detecting and measuring accurately the following: is the power torque tool placed correctly onto a wheel-nut (this means that the power torque tool is arranged such that it is able to apply a rotational force to a screw or nut or that the rotational axis of the rotational shaft of the power torque tool coincides with the rotational axis of the screw or nut, for example) for tightening or untightening or has the user triggered the tool unintentionally, for example; correcting the angular rotation measurement of the wheel-nut (when tightening) as the tool rotates as well (to some degree) in the opposite direction when hammering. This unintentional tool rotation (because the tool operator has not the strength to keep the tool steady when hammering) will cause a faulty angle-sensor reading, in particular when the angle sensor is sensing the relative angle between the rotational shaft and the power torque tool or the housing of the power torque tool. The consequence of a faulty angle sensor reading results in an over tightening or under tightening of a wheel-nut, for example. The motion sensor arrangement will detect that the tool housing is turning during the tools operation and that information can be subtracted or added (depending on the direction of the rotational movement of the housing of the power torque tool) to the angle sensor reading for correcting the wheel-nut turning measurement; identifying that the order in which the wheel-nuts are tightened (for example when 4 or more wheel-nuts are used to mount a wheel, like truck and coach wheels) is the one specified by the vehicle and wheel manufacturer.

In one embodiment, to detect all the possible movements the power torque tool can make, a three axes accelerometer and three axes gyro sensor modules are provided (in total 6 sensors). However, only some specific tool movements may be worth following and detecting, which is why a smaller number than 6 motion and movement sensors can also be used in one embodiment. On the other hand, the manufacturing costs of these sensor components has fallen drastically over the last few years (because of their use in mobile phones and computer game equipment, for example) that there may be not much difference any more when buying a single axis or a triple axes accelerometer or gyro.

The features of single and multi axes accelerometers and gyros as used in one embodiment of the power torque tool may be summed up as follows: automatic detection when a wheel-nut is tightened or untightened, independent to what wheel-nut type is used (metric or imperial); angle sensor compensation when the impact fastener tool "kicks-back" during its operation (by using the signal from a gyro to detect that the fastener tool which is held in the hands of the operator is turning slightly in the opposite direction where the drive shaft is turning and with this causing faulty angle sensor readings.

According to a further embodiment, the motion sensor arrangement is adapted for sensing a rotational movement of the power torque tool around a rotational axis.

As described above, when applying a torque to the rotational shaft the power torque tool or the housing of the power torque tool may turn slightly in the opposite direction to the rotational direction of the rotational shaft. This movement of the housing of the power torque tool will be referred to as compensation movement, which is in particular a rotational movement.

The motion sensor arrangement is thus adapted to detect a rotational movement of the power torque tool. The compensation movement may in particular be a rotational movement about an axis, which may in particular be the central axis of the rotational shaft. As to be able to detect such a rotational movement, the motion sensor arrangement may be arrangement with a lateral offset to the central axis of the main shaft or rotational shaft of the power torque tool. In other words, the motion sensor arrangement is arranged spaced apart from the central axis of the rotational or main shaft of the power torque tool such that the motion sensor arrangement will be exerted a force when the power torque tool rotates or starts rotating about the central axis of the main shaft.

According to a further embodiment, the motion sensor arrangement is adapted for sensing a spatial motion of the power torque tool.

A spatial motion of the power torque tool is a free motion in space, i.e. along one or more axes in a three dimensional space.

According to a further embodiment, the motion sensor arrangement comprises at least one element of the group consisting of an acceleration sensor and a gyroscope.

According to a further embodiment, the motion sensor arrangement is adapted to detect a movement only in two directions, i.e. along a virtual surface. Therefore, the number of required sensors can be reduced from 3 to 2 when using only an accelerometer or a gyroscope, or from 6 to 4, when using both an accelerometer and a gyroscope. In this embodiment, only the movement of the power torque tool along the surface of the wheel is being detected, wherein the movement of the power torque tool towards the wheel and away of the wheel is not detected.

According to a further embodiment, the motion sensor arrangement comprises at least one element of the group consisting of an acceleration sensor and a gyroscope.

According to a further embodiment, the power torque tool comprises a driving impact identification unit which is adapted for identifying a driving impact (i) onto a rotatable shaft generated by a shaft driving impact generator.

The rotatable shaft is the main shaft of the power torque tool and is adapted for exerting the torque force or the rotational movement to a workpiece.

The driving impact generator generates the initial torque force which is applied to the rotatable shaft.

According to a further embodiment, the driving impact identification unit comprises a solid-borne sound microphone, wherein the driving impact (i) is identified when the solid-borne sound microphone senses a solid-borne sound signal meeting a predetermined sound criteria (cs) and wherein the predetermined sound criteria (cs) is based on an interrelation of an amplitude of the solid-borne sound signal and a frequency of the solid-borne sound signal.

In other words, the driving impact identification unit is adapted to identify whether or not a driving impact is applied to a workpiece or, in general whether or not the power torque tool is in an operational state.

According to a further embodiment, instead or additionally to the microphone signal, an output signal of an accelerometer can be used to detect whether or not the power torque tool is being operated.

The microphone (or the filtered output signal of an accelerometer where its measurement axis is aligned with the hammering mechanism of the fastener tool) detects and measures accurately when the fastener tool is hammering. Hammering in this case means that the impact pulses are released to the tools main drive shaft which generates the toque pulses that are applied to the wheel-nut for example. The signal amplitude of the microphone is loosely related to the actual impact torque value peak measurement. Therefore the microphone signal amplitude (or the amplitude of the accelerometer signal output) is providing an indication about the actual provided torque energy by the fastener tool.

Using a microphone may allow eliminating the need of a costly true torque sensor device, and with this will reduce the manufacturing costs of the power torque tool with embedded smart electronics.

The features of the microphone or of the accelerometer being used as an impact torque sensor may be summed up as follows: lower cost solution than when using a more complex real-time torque sensor that has to be placed at the main drive shaft of the tool; allows reducing the overall size of the power torque tool as the main drive shaft can be shortened (as the traditional torque sensor is not needed). This may also reduce the total weight of the tool; can wake-up the tools electronics system with the first hammering blow has been detected (sleep-state of the tool when battery powered electronics is used); detects the time-length of each impact hammering and with this allows to estimate the torque energy generated by this hammering pulse (torque energy = absolute torque value * torque pulse time, or better, the area that is covered by the torque pulse signal amplitude over time).

According to a further embodiment, the power torque tool comprises a torque determining unit, wherein the torque determining unit comprises a comparator for comparing a first angular position of the rotatable shaft at a first time (t1) and a second angular position of the rotatable shaft at a second time (t2) and for determining the torque based on the comparing result, wherein the first time is immediately before the identified drive impact and the second time is immediately after the identified drive impact.

The difference between the second angular position and the first angular position may of course provide information about a partial rotation (<360°) or equal or more than one full rotation (>=360°) of the main shaft.

The first and second angular position of the main shaft may in particular be specified with regard to the power torque tool or a housing of the power torque tool.

According to a further embodiment, the power torque tool comprises a motion plausibility analyzing unit which is adapted for identifying the plausibility of a motion signal of the motion sensor arrangement with respect to an intensity and a duration of the motion signal and wherein the motion plausibility analyzing unit is adapted for identifying the plausibility of the motion signal when the motion signal meets a predetermined motion criteria (cm), wherein the predetermined motion criteria is based on an interrelation of the intensity and the duration of the motion signal.

In other words, the motion plausibility analyzing unit is adapted to determine whether or not a movement or motion of the power torque tool is the result of a spatial movement of the power torque tool by an operator. In case the motion signal is the result of vibrations of the power torque tool during its operation, the motion plausibility analyzing unit will not use these signals for determining a spatial movement of the power torque tool. In particular if the detected motion pattern is a rotational movement based on frequently repeating rotational impulses, such a pattern may indicate that the power torque tool is being operated and that the detected signals are not being used for determining a spatial movement of the power torque tool.

The tool motion pattern receiving unit receives a nominal or desired motion pattern. The tool motion evaluation unit compares the sensed spatial motion, i.e. the actual or real motion pattern, with the nominal motion pattern.

Thus, the power torque tool can identify whether or not an operator is performing the single steps of fastening a wheel, for example, in the prescribed order, i.e. is following the nominal motion pattern.

According to a further embodiment, the tool motion evaluation unit comprises a comparator unit being adapted to compare a sensed spatial motion of the power torque tool with a tool motion pattern received by the tool motion pattern receiving unit, wherein the tool motion pattern represents a predetermined sequence of operation locations of the power torque tool.

When comparing the actual tool motion pattern with a nominal pattern, any deviation can be detected and thus can be indicated such that the operator of the power torque tool can handle the power torque tool accordingly.

According to a further embodiment, the power torque tool comprises a data base having stored a plurality of tool motion patterns, wherein the database is operatively connected to the tool motion pattern receiving unit to provide a predetermined tool motion pattern.

The tool motion pattern receiving unit is connected via a signal transmitting connection (wireless or wire bound) to the database such that one of a multitude of patterns stored in the database can be transmitted to the tool motion pattern receiving unit.

According to a further embodiment, the power torque tool comprises a receiver unit being adapted to receive an identification representing a tool operation pattern based on which the tool motion pattern is selected from the database, wherein the receiver unit is adapted to receive an identification representing a predetermined sequence of screws or nuts to be fasted to mount a wheel onto a hub, wherein the identification is sent by a sender mounted on at least one of a wheel, a hub and a chassis of a vehicle.

In this embodiment, the power torque tool will automatically receive the appropriate tool motion pattern for fastening a specified wheel to a specified hub of a vehicle. Therefore, the mode of operation can be further improved.

According to a further embodiment, the power torque tool comprises an operation mode detection unit which is adapted to detect a driving operation mode, wherein the power torque tool is adapted to interrupt the sensing of the motion sensor arrangement when a driving operation mode is detected.

When fastening a workpiece, vibrations to the power torque tool may occur. As to not use the signals caused by these vibrations for determining a spatial motion of the power torque tool, the sensing of the motion sensor arrangement is being interrupted for at least the spatial motion signals.

In one embodiment, in this state, the detection of the rotational movements of the power torque tool will not be deactivated or interrupted.

According to a further embodiment, the power torque tool comprises a warning indicator and the power torque tool is adapted to warn a user that the user deviated with an actual sequence of operation locations from the predetermined sequence of operation locations.

The warning indicator is sort of passive mechanism for avoiding failures of operation. The operator takes notice of the warning indicator and can thus change the mode of operation.

According to a further embodiment, the power torque tool comprises an operation interrupter, wherein the power torque tool is adapted to interrupt the operation when evaluating that the user deviated with an actual sequence of operation locations from the predetermined sequence of operation locations.

The operation interrupter may in one embodiment be a switch, for example an electronically driven switch which interrupts the energy transfer to the shaft driving impact generator.

The power torque tool as described above and hereinafter may in particular be used for tightening wheel nuts correctly. Therefore, the following elements may be used and the following steps may be carried out: using the motion or movement detection sensors to identify that the wheel gun has been placed onto the wheel nuts. This is the case when the fastener tool is held horizontally or the rotational axis of the main shaft coincides with the rotational axis of the workpiece and makes no up-and-down movement or side-to-side movement. Only when the tool is taking and holding this position, the built-in intelligence of the sensor electronics will declare further torque measurement actions as valid; measuring the angular position of the tool's main dive shaft before and after a torque pulse (impact or hammer) has taken place. This information will tell by how much the drive shaft (and the attached nut or bolt) has turned and in which direction; when the angular changes are increasing (i.e. a rotation in the counterclockwise direction) from impact pulse to impact pulse, then the wheel-nut will be untightened or tightened and when the angular changes are decreasing (i.e. a rotation in the clockwise direction) from impact pulse to impact pulse, then the wheel-nut will be tightened (this example applies to clockwise closing screws; in case of counterclockwise closing screws, the opposite cases apply); when the wheel-nut is no longer turning (defined by not achieving a programmable minimum angle value from impact pulse to the next impact pulse) then assuring that a minimum number of tightening-turns have taken place to assure that there is no cross-threatening has taken place (the wheel-nut did not jammed right from the start); when all these tests have been passed correctly, then assuring that the wheel-nut will not be over-tightened by allowing only an additional turning of the wheel-nut of a programmable amount (a value that lies between 10 and 30 deg angle, for example); actually, to complete this tightening process correctly, there is no need for a proper torque sensor. Instead a microphone or the signal from one of the accelerometers can be used. The Impact pulse has its own, easy to identify signal frequency that can be filtered by a band pass filter.

Further, the power torque tool as described above and hereinafter may also be used for following the wheel-nut tightening pattern. Subject is to assure that the fastener tool operator is following a specific pattern in which the wheel-nuts have to be tightened. This request may apply in particular to wheels that are mounted with four or more wheel-nuts. Therefore, the following elements may be used and the following steps may be carried out: the semi-torque sensor (microphone) marks the beginning of the tightening operation by detecting the first single wheel-nut tightening operation. Assume it is the wheel-nut number one out of 12 nuts in total (in case of a brand specific truck wheel); the motion sensors (accelerometers) remember this position as a reference point; at the end of the nut tightening action, the motion and position sensors built in the wheel-gun follow now the movement of the wheel-gun to the next wheel-nut that has to be tightened, assume nut number seven (which is opposite and furthered away from nut number one; the semi-torque sensor (microphone) will detect the moment when the wheel-nut number seven will be tightened and will deactivate any further measurements of the accelerometers (as the vibration will bring the measurements in saturation); as soon as the hammering stops, the microphone will detect these and will reactivate the accelerometer measurements. The accelerometers are now following the tool movement to the next wheel-nut which may be nut number four (assuming that the wheel-nuts are arranged and numbered as the numbers on a clock face, and so on. At the end of this procedure of tightening the twelve wheel nuts the sensor signal conditioning and signal processing electronics can rebuilt the movement of the fastener tool, following from wheel-nut to wheel-nut and clearly analyze and determine that all of the twelve wheel-nuts have been tightened, or if one or more have not been tightened properly that a predefined pattern has been followed correctly in which order the wheel-nuts have to be tightened. Any wrong movement of the wheel-gun will be identified and reported in real-time or afterwards. Measuring the diameter of the wheel-nut circle in which they are arranged and the spacings between the wheel-nuts and with this make sure if the tool settings are for the right wheel (large wheel or smaller wheel). The output of the sensor system electronics can be a real-time information about which wheel-nut has to be tightened next.

The power torque tool as described above and hereinafter is useable where-ever impact and powerful impulse fastener tools are used. While the descriptions provided above are focused on hand-held fastener tools, this sensing technology can be applied to non-hand-held fastener tools as well. Some of the typical applications for hand-held and non-hand-held fastener tools are listed in the following: motor sport wheel mounting and dismounting; commercial truck and coach tire / wheel change; passenger cars wheel change; construction workers assembly tool (steel structures of bridges and buildings, for example); wind-turbine farm assembly and construction; ship yards assembly tool; rail-road track assembly and mounting; oil industry / oil rig / mining and drilling construction work, assembly work, and maintenance work; large industrial equipment assembly, construction, and maintenance work, like on cranes, diggers, processing equipment, monster load-dump trucks.

The torque criteria, the sound criteria and the motion criteria each may be a maximum threshold, a minimum threshold and/or a combination thereof in the meaning of a range.

In the power torque tool control device, the torque may be determined based on the sensed motion, e.g. the acceleration, and further information, like the known geometry of the power torque tool/wheel gun and/or the distance of the motion sensor arrangement to the rotational axis of the main shaft of the power torque tool. Also additional information may be used for torque determination, like the material properties of a screw or nut to be fastened. E.g. the strain and de-strain angle of the fastened screw may be determined, so that at known material and geometrical properties of the screw the applied torque may be derived.

The power torque tool may be used to ensure the correct mounting sequence of wheel nuts or screws, or cylinder head nuts or screws. The monitoring device may detect horizontal motion relating to horizontal motion patterns like mounting a cylinder head, or vertical motion relating to vertical motion patterns like mounting a wheel on a hub. Of course also combined motions may be monitored.

Further embodiments are described below.

According to a further aspect, a power torque tool control device is provided which comprises a motion sensor arrangement, a driving impact identification unit, and a torque determining unit. The motion sensor arrangement is adapted for sensing a motion of a rotatable shaft. The driving impact identification unit is adapted for identifying a driving impact (i) onto the rotatable shaft generated by a shaft driving impact generator. The torque determining unit comprises a comparator for comparing the sensed motion of the rotatable shaft at a first time (t1) and the sensed motion of the rotatable shaft at a second time (t2) and for determining the torque based on the comparing result, wherein the first time is immediately before the identified drive impact and the second time is immediately after the identified drive impact.

According to a further embodiment, the driving impact identification unit comprises a solid-borne sound microphone, wherein the driving impact (i) is identified when the solid-borne sound microphone senses a solid-borne sound signal meeting a predetermined sound criteria (cs).

According to a further embodiment, the predetermined sound criteria (cs) is based on an interrelation of an amplitude of the solid-borne sound signal and a frequency of the solid-borne sound signal.

According to a further embodiment, the motion sensor arrangement comprises an angle sensor being adapted for sensing an acceleration of the rotatable shaft.

According to a further embodiment, the power torque tool control device as described above and hereinafter further comprises a motion plausibility analyzing unit, the motion plausibility analyzing unit being adapted for identifying the plausibility of a motion signal of the motion sensor arrangement with respect to an intensity and a duration of the motion signal.

According to a further embodiment, the motion plausibility analyzing unit is adapted for identifying the plausibility of the motion signal when the motion signal meets a predetermined motion criteria (cm), wherein the predetermined motion criteria is based on an interrelation of the intensity and the duration of the motion signal.

According to a further aspect, a power torque tool is provided comprising a rotatable shaft, a drive impact generator for generating a driving impact onto the rotatable shaft, and a power torque tool control device as described above and hereinafter. The motion sensor arrangement is adapted for sensing a motion of the rotatable shaft. The power torque tool control device is adapted for terminating the driving impact (i) when a determined torque meets a predetermined torque criteria (ct).

According to a further embodiment, the power torque tool is a wheel gun.

According to a further embodiment, a power torque tool control method is provided and comprises the following steps: sensing a motion of a rotating shaft, identifying a driving impact (i) generated onto a rotatable shaft by a shaft driving impact generator, identifying a first time (t1) immediately before the identified drive impact and identifying a second time (t2) immediately after the identified drive impact, comparing a first sensed angular position of the rotatable shaft at the first time and a second sensed angular position of the rotatable shaft at the second time, and determining a torque at the rotatable shaft based on the comparing result.

According to a further aspect, a power torque tool monitoring device is provided. The power torque tool monitoring device comprises a tool motion sensor arrangement, a tool motion pattern receiving unit, and a tool motion evaluation unit. The tool motion sensor arrangement is adapted for sensing a spatial motion of the power torque tool. The tool motion pattern receiving unit is adapted for receiving a predetermined tool motion pattern. The tool motion evaluation unit is adapted for evaluating whether the sensed spatial motion of the tool corresponds to the received tool motion pattern and to communicate the result of the evaluation.

According to an embodiment, the tool motion evaluation unit comprises a comparator unit being adapted to compare a sensed spatial motion of the power torque tool with a tool motion pattern received by the tool motion pattern receiving unit.

According to a further embodiment, the tool motion pattern represents a predetermined sequence of operation locations of a power torque tool.

According to a further embodiment, the tool motion pattern represents a predetermined sequence of screws or nuts to be fasted, in particular to mount a wheel onto a hub.

According to a further embodiment, the power torque tool monitoring device further comprises a database having stored a plurality of tool motion patterns, wherein the database is operatively connected to the tool motion pattern receiving unit to provide a predetermined tool motion pattern.

According to a further embodiment, the power torque tool monitoring device further comprises a receiver unit being adapted to receive an identification representing a tool operation pattern based on which the tool motion pattern is selected from the data base.

According to a further embodiment, the receiver unit is adapted to receive an identification representing a predetermined sequence of screws or nuts to be fasted to mount a wheel onto a hub, wherein the identification is sent by a sender mounted on at least one of a wheel, a hub and a chassis of a vehicle.

According to a further embodiment, the power torque tool monitoring device further comprises an operation mode detection unit, wherein the operation mode detection unit is adapted to detect a driving operation mode, wherein the power torque tool monitoring device is adapted to interrupt the sensing of the tool motion sensor arrangement when a driving operation mode is detected.

According to a further embodiment, the power torque tool monitoring device further comprising a warning indicator, wherein the power torque tool monitoring device is adapted to warn a user that the user deviated with an actual sequence of operation locations from the predetermined sequence of operation locations.

According to a further embodiment, the power torque tool monitoring device further comprises an operation interrupter, wherein the power torque tool monitoring device is adapted to interrupt the operation when evaluating that the user deviated with an actual sequence of operation locations from the predetermined sequence of operation locations.

According to a further aspect, a power torque tool comprises a power torque tool monitoring device as described above and hereinafter and the power torque tool is a wheel gun.

According to a further aspect, a power torque tool monitoring method is provided and comprises the steps sensing a spatial motion of the power torque tool, receiving a predetermined tool motion pattern, evaluating whether the sensed spatial motion of the power torque tool corresponds to the received tool motion pattern and communicating the result of evaluating.

The spatial motion may in particular be sensed with the motion sensor arrangement which comprises at least one accelerometer and/or at least one gyroscopes, wherein the accelerometer and/or the gyroscope may be adapted for sensing a motion along one direction, two directions along a plane or surface, or three directions in a three dimensional space.

Exemplary embodiments will be described with reference to the following drawings.

### Brief description of the drawings

Fig. 1 schematically illustrates a power torque tool according an exemplary embodiment.
Fig. 2 schematically illustrates a motion and torque signal according to another exemplary embodiment.
Fig. 3 schematically illustrates the steps of a power torque tool control method according to another exemplary embodiment.
Fig. 4 schematically illustrates the steps of a power torque tool control method according to another exemplary embodiment.
Fig. 5 schematically illustrates a monitoring device for a power torque tool according to another exemplary embodiment.
Fig. 6 schematically illustrates the steps of a power torque tool monitoring method.
Fig. 7 schematically illustrates the motion pattern of a power torque tool according to another exemplary embodiment.
Fig. 8 illustrates the process of monitoring the motion pattern of a power torque tool according to another exemplary embodiment.
Fig. 9 illustrates the process of monitoring the motion pattern of a power torque tool according to another exemplary embodiment.

The embodiments shown in the drawings are schematic and not to scale. The same reference signs are referring to similar or identical elements.

### Detailed description of exemplary embodiments

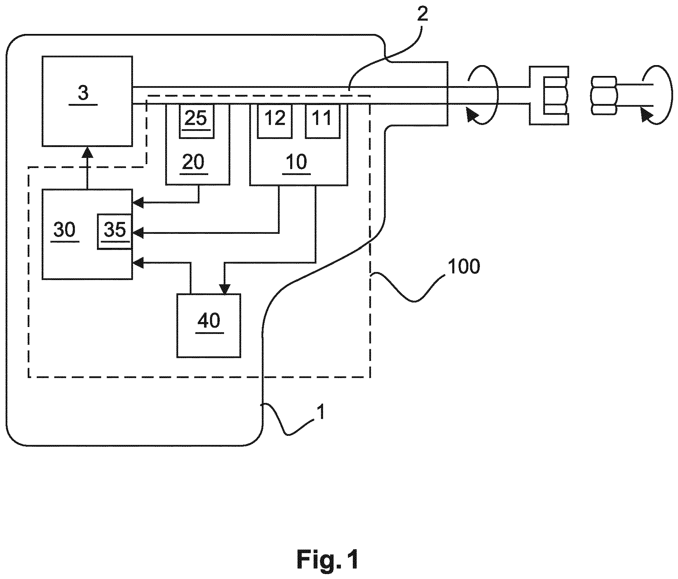

Fig. 1 illustrates a power torque tool 1 comprising a rotatable shaft 2 or main shaft 2 which is driven by a shaft driving impact generator 3. The main shaft 2 is adapted for rotating a workpiece like a screw, for example.

The power torque tool 1 comprises a motion sensor arrangement 10 with an acceleration sensor 11 and a gyroscope 12, and a driving impact identification unit 20 with a solid-borne sound microphone 25. Further, the power torque tool comprises a torque determining unit 30 with a comparator 35 and a motion plausibility analyzing unit 40. The elements 10, 20, 30 and 40 may be referred to as a power torque tool control device 100.

The motion sensor arrangement 10 may be arranged spaced apart from the rotatable shaft 2. In one embodiment, the motion sensor arrangement is located in the handle or handhold of the power torque tool such that a distance from the rotatable shaft to the motion sensor arrangement is maximum.

The motion sensor arrangement 10 provides the sensor signals to the torque determining unit 30 and to the motion plausibility analyzing unit 40. The torque determining unit 30 is interconnected with the shaft driving impact generator 3 and is adapted to control the generator 3 as to change the torque applied by the generator 3 to the rotatable shaft.

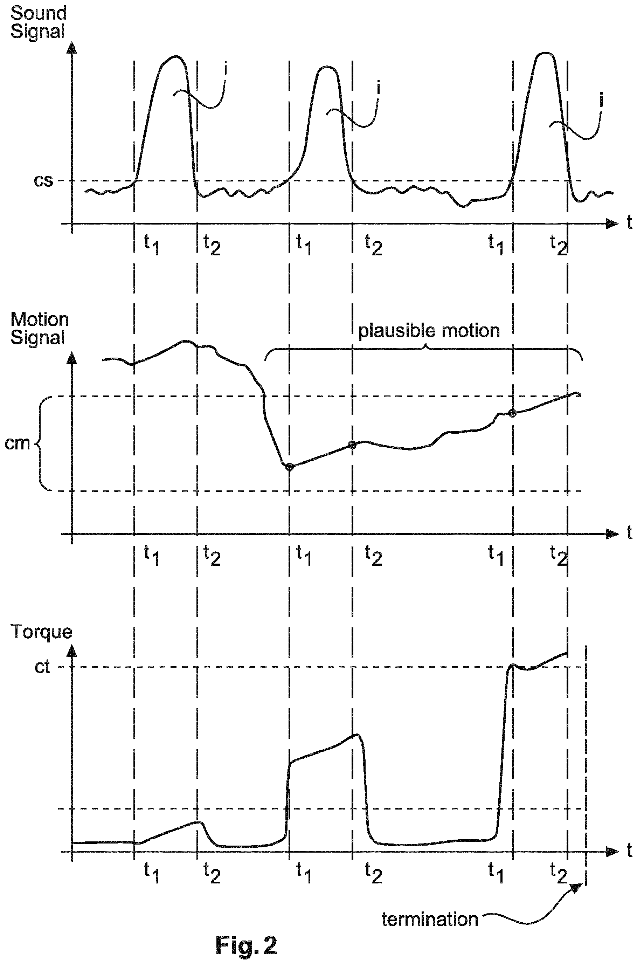

Fig. 2 shows three signals over the time: the sound signal detected by the microphone, the motion signal detected by the motion sensor arrangement and the torque signal. Fig. 2 shows three cycles (left, middle, right), each starting with t1 and ending with t2.

The left cycle starts when the sound signal exceeds the predetermined sound criteria cs. In the same cycle, the motion signal is above the upper signal value of cm, therefore the torque measured in this cycle is not plausible, as the power torque tool is being moved more than would be possible if the power torque tool was in an appropriate operation position, i.e. attached to a workpiece like a screw. Such a motion signal as shown in the left cycle could indicate that the operator of the power torque tool may have started the power torque tool unintentionally.

In the middle and right cycle, the motion signal is between the lower limit and the upper limit of the predetermined motion criteria cm. Therefore, the torque measurements are being considered valid in the middle and right cycle.

As the torque exceeds the predetermined torque criteria at the end of the right cycle, the operation of the power torque tool is terminated. No further impact is applied to the rotational shaft.

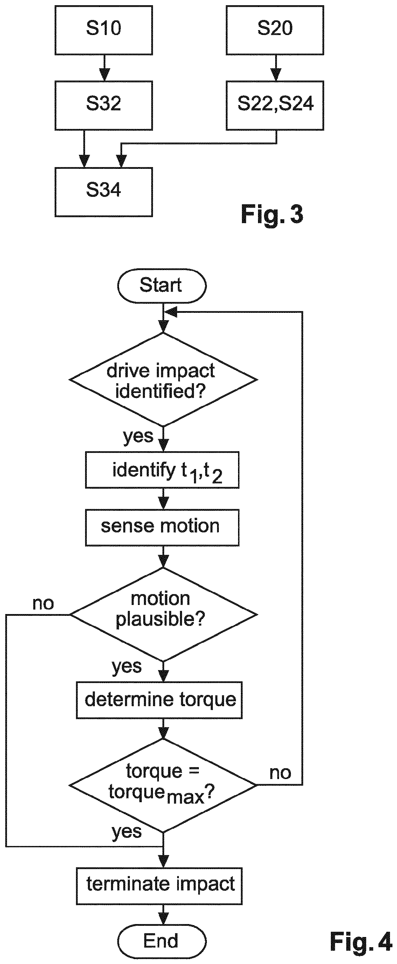

Fig. 3 illustrates the steps of a power torque tool control method. In step S10, the motion and angular position of the rotating shaft of the power torque tool is being sensed. A first angular position of the rotatable shaft at a first time and a second angular position of the rotatable shaft at a second time are being compared in step S32 as to determine whether or not the rotatable shaft changed its angular position.

Parallel to step S10, in step S20 a driving impact generated onto the rotatable shaft by the shaft driving impact generator is being identified. In steps S 22 and S24, a first time t1 and a second time t2 are being identified immediately before the identified drive impact and immediately after the identified drive impact, respectively.

In step S34, a torque at the rotatable shaft based on the comparing result is being determined.

Fig. 4 illustrates another representation of the method shown in Fig. 3. After starting the method, it is being determined whether or not a drive impact has been identified. Only in case a drive impact has been identified, the first ans second times t1, t2 are being identified. In the next step, the motion and the angular position of the rotatable shaft at the first and second times is being sensed. If the motion is not plausible, the impact will be terminated, for example in case of a unintentional operation. If the motion is plausible, the torque is being determined. In case the measured torque is less than the maximum allowed torque, the process will start again, otherwise the impact will be terminated.

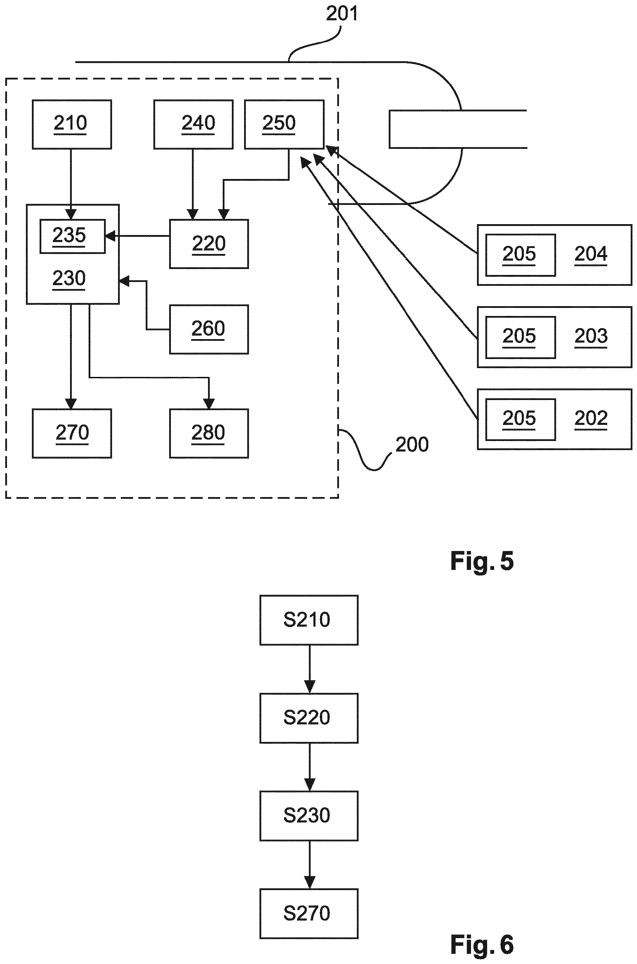

Fig. 5 illustrates a power torque tool with a power torque tool monitoring device 200. The monitoring device 200 comprises a motion sensor arrangement 210, a tool motion pattern receiving unit 220, a tool motion evaluation unit 230 with a comparator unit 235, a database 240, a receiver unit 250, an operation mode detection unit 260, a warning indicator 270, and an operation interrupter 280.

A sender 205 may be attached to the wheel 202, the hub 203, and/or the chassis 204 of a vehicle (not shown). The sender 205 is transmitting the required information for fastening a specific wheel to the specific vehicle to the receiver unit 250. The receiver unit 250 will transmit the received information to the tool motion pattern receiving unit 220, which further receives the nominal motion pattern from the database 240. The tool motion sensor arrangement 210 senses the motion of the power torque tool and transmits it to the comparator 235 of the tool motion evaluation unit 230. The comparator 235 will compare the sensed motion pattern of the power torque tool with the nominal motion pattern provided by the tool motion pattern receiving unit 220. The operation mode detection unit 260 is connected to the tool motion evaluation unit 230 and determines whether or not a sensed signal is used for evaluating the motion pattern of the power torque tool.

In case the comparator 235 detects a deviation of the sensed motion pattern (provided by motion sensor arrangement 210) from the nominal motion pattern (provided by tool motion pattern receiving unit 220), the warning indicator 270 may indicate this deviation, for example by an optical or audio signal, and/or the operation interrupter 280 may interrupt the operation of the power torque tool.

Fig. 6 illustrates the steps of an exemplary power torque tool monitoring method. In step S210, a spatial motion of the power torque tool is being sensed. In step S220, a predetermined tool motion pattern is being received. In step S230, is is being evaluated whether the sensed spatial motion of the power torque tool corresponds to the received tool motion pattern, and in step S270 the result of the evaluation is being communicated, for example to the warning indicator or to the operation interrupter.

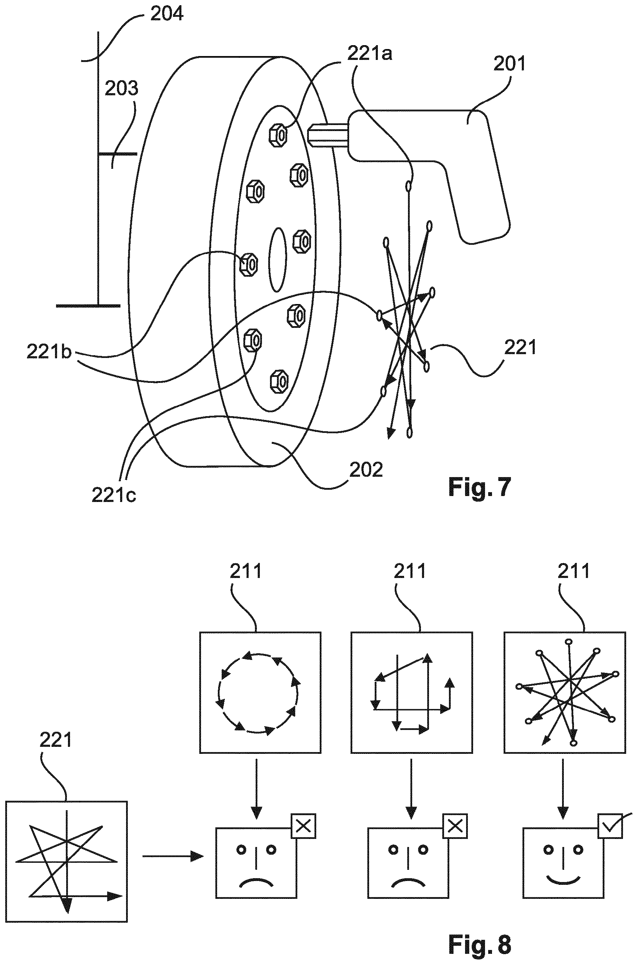

Fig. 7 schematically illustrates the fastening process of a wheel 202 to a hub 203 of a vehicle's chassis 204 with a power torque tool 201.

The wheel is attached to the hub with eight screws which are indicated by the operation locations 221a, 221b, 221c. By means of the predetermined tool motion pattern 221 is indicated in which order the screws must be fastened.

Fig. 8 illustrates the functioning of the power torque tool. When the sensed spatial motion 211 (i.e. the actual motion pattern 211) of the power torque tool is a circular one (left pattern), the power torque tool will detect that it deviates from the nominal or predetermined motion pattern 221 and the warning indicator will show the deviation. The same applies to the middle pattern, as this does not suit to the predetermined motion pattern 221. The right motion pattern 211 is identical to the predetermined motion pattern 221 and therefore the power torque tool will not send out a warning and/or will not interrupt operation of the power torque tool.

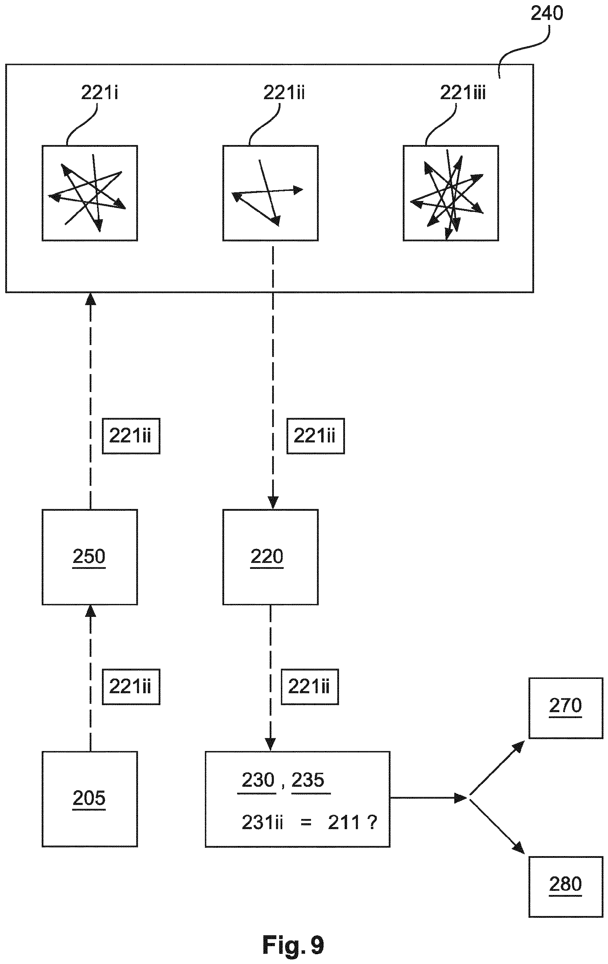

Fig. 9 illustrates the data transfer of the predetermined motion patterns 221i, 221ii, 221iii from the database 240 to the tool motion pattern receiving unit 220 in light of the information received by the receiver unit 250 from the sender 205.

The sender 205 transmits the information to the receiver unit 250 that the actual wheel requires the motion pattern 221ii to be fastened to the hub. The receiver unit will forward this information to the database 240. In other words, the motion pattern 221ii has been chosen as the predetermined motion pattern. This motion pattern 221ii will now be transmitted to the tool motion evaluation unit 230 and the comparator 235. The comparator compares the predetermined motion pattern 221ii with the sensed motion pattern 211 of the power torque tool. In case the motion patterns 221ii and 211 are not identical or similar, a warning signal may be activated by the warning indicator 270 and/or the operation interrupter 280 will interrupt the operation of the power torque tool.

### List of reference signs

- 1: wheel gun
- 2: rotatable shaft
- 3: shaft driving impact generator
- 10: motion sensor arrangement
- 11: acceleration sensor
- 12: gyroscope
- 20: driving impact identification unit
- 25: solid-borne sound microphone
- 30: torque determining unit
- 35: comparator
- 40: motion plausibility analyzing unit
- 100: power torque tool control device
- 200: power torque tool monitoring device
- 201: power torque tool
- 202: wheel
- 203: hub
- 204: chassis
- 205: sender
- 210: tool motion sensor arrangement
- 211: spatial motion
- 220: tool motion pattern receiving unit
- 221: predetermined tool motion pattern
- 221a: operation location
- 221i: motion pattern
- 230: tool motion evaluation unit
- 235: comparator unit
- 240: database
- 250: receiver unit
- 260: operation mode detection unit
- 270: warning indicator
- 280: operation interrupter

## Claims

1. Power torque tool (201), comprising:
a motion sensor arrangement (10);
wherein the motion sensor arrangement is mechanically attached to the power torque tool;
wherein the motion sensor arrangement is adapted for sensing a motion of the power torque tool;
**characterized in that**
further comprising a tool motion pattern receiving unit (220); and
a tool motion evaluation unit (230);
wherein the tool motion pattern receiving unit is adapted for receiving a predetermined tool motion pattern (221),
wherein the tool motion evaluation unit is adapted for evaluating whether the sensed spatial motion of the power torque tool corresponds to the received tool motion pattern and to communicate the result of the evaluation.

2. Power torque tool according to claim 1,
wherein the motion sensor arrangement is adapted for sensing a rotational movement of the power torque tool around a rotational axis.

3. Power torque tool according to claim 1 or 2,
wherein the motion sensor arrangement is adapted for sensing a spatial motion of the power torque tool;
wherein the spatial motion of the power torque tool is a free motion in space along one or more axes in a three-dimensional space.

4. Power torque tool according to any one of the preceding claims,
wherein the motion sensor arrangement comprises at least one element of the group consisting of an acceleration sensor (11) and a gyroscope (12).

5. Power torque tool according to any one of the preceding claims,
comprising a driving impact identification unit (20);
wherein the driving impact identification unit is adapted for identifying a driving impact (i) onto a rotatable shaft (2) generated by a shaft driving impact generator (3).

6. Power torque tool according to claim 5,
wherein the driving impact identification unit (20) comprises a solid-borne sound microphone (25), wherein the driving impact (i) is identified when the solid-borne sound microphone senses a solid-borne sound signal meeting a predetermined sound criteria (cs);
wherein the predetermined sound criteria (cs) is based on an interrelation of an amplitude of the solid-borne sound signal and a frequency of the solid-borne sound signal.

7. Power torque tool according to any one of the preceding claims,
comprising a torque determining unit (30);
wherein the torque determining unit comprises a comparator (35) for comparing a first angular position of the rotatable shaft at a first time (t1) and a second angular position of the rotatable shaft at a second time (t2) and for determining the torque based on the comparing result, wherein the first time is immediately before the identified drive impact and the second time is immediately after the identified drive impact.

8. Power torque tool according to any one of the preceding claims,
further comprising a motion plausibility analyzing unit (40);
wherein the motion plausibility analyzing unit is adapted for identifying the plausibility of a motion signal of the motion sensor arrangement (10) with respect to an intensity and a duration of the motion signal; and
wherein the motion plausibility analyzing unit (40) is adapted for identifying the plausibility of the motion signal when the motion signal meets a predetermined motion criteria (cm), wherein the predetermined motion criteria is based on an interrelation of the intensity and the duration of the motion signal.

9. Power torque tool according to one of the preceding claims,
wherein the tool motion evaluation unit (230) comprises a comparator unit (235) being adapted to compare a sensed spatial motion (211) of the power torque tool (201) with a tool motion pattern (221) received by the tool motion pattern receiving unit (220);
wherein the tool motion pattern (221) represents a predetermined sequence of operation locations (221a, 221b, 221c) of the power torque tool (201).

10. Power torque tool according to one of the preceding claims,
further comprising a data base (240) having stored a plurality of tool motion patterns (221i, 221ii, 221iii), wherein the database is operatively connected to the tool motion pattern receiving unit (220) to provide a predetermined tool motion pattern.

11. Power torque tool according to claim 10,
further comprising a receiver unit (250) being adapted to receive an identification representing a tool operation pattern (221i, 221ii, 221iii), based on which the tool motion pattern (221) is selected from the data base (240);
wherein the receiver unit (250) is adapted to receive an identification representing a predetermined sequence of screws or nuts to be fasted to mount a wheel (202) onto a hub (203), wherein the identification is sent by a sender (205) mounted on at least one of a wheel (202), a hub (203) and a chassis (204) of a vehicle.

12. Power torque tool according to one of the preceding claims,
further comprising an operation mode detection unit (260),
wherein the operation mode detecting unit is adapted to detect a driving operation mode, wherein the power torque tool is adapted to interrupt the sensing of the motion sensor arrangement (10) when a driving operation mode is detected.

13. Power torque tool according to one of the preceding claims,
further comprising a warning indicator (270),
wherein the power torque tool is adapted to warn a user that the user deviated with an actual sequence of operation locations from the predetermined sequence of operation locations.

14. Power torque tool according to one of the preceding claims,
further comprising operation interrupter (280),
wherein the power torque tool is adapted to interrupt the operation when evaluating that the user deviated with an actual sequence of operation locations from the predetermined sequence of operation locations.

## Patentansprüche

1. Drehmomentwerkzeug (201), umfassend:
eine Bewegungssensoranordnung (10);
wobei die Bewegungssensoranordnung mechanisch an dem Drehmomentwerkzeug befestigt ist;
wobei die Bewegungssensoranordnung zum Erfassen einer Bewegung des Drehmomentwerkzeugs ausgebildet ist;
**dadurch gekennzeichnet, dass**
das Drehmomentwerkzeug ferner eine Werkzeugbewegungsmuster-Empfangseinheit (220); und
eine Werkzeugbewegungs-Auswerteeinheit (230) umfasst;
wobei die Werkzeugbewegungsmuster-Empfangseinheit zum Empfangen eines vorbestimmten Werkzeugbewegungsmusters (221) ausgebildet ist, wobei die Werkzeugbewegungs-Auswerteeinheit ausgebildet ist zum Bewerten, ob die erfasste räumliche Bewegung des Drehmomentwerkzeugs dem empfangenen Werkzeugbewegungsmuster entspricht, und zum Kommunizieren des Ergebnisses der Auswertung.

2. Drehmomentwerkzeug nach Anspruch 1,
wobei die Bewegungssensoranordnung zum Erfassen einer Drehbewegung des Drehmomentwerkzeugs um eine Drehachse ausgebildet ist.

3. Drehmomentwerkzeug nach Anspruch 1 oder 2,
wobei die Bewegungssensoranordnung ausgebildet ist zum Erfassen einer räumlichen Bewegung des Drehmomentwerkzeugs;
wobei die räumliche Bewegung des Drehmomentwerkzeugs eine freie Bewegung im Raum entlang einer oder mehrerer Achsen in einem dreidimensional Raum ist.

4. Drehmomentwerkzeug nach einem der voranstehenden Ansprüche,
wobei die Bewegungssensoranordnung mindestens ein Element aus der Gruppe umfasst, die aus einem Beschleunigungssensor (11) und einem Gyroskop (12) besteht.

5. Drehmomentwerkzeug nach einem der voranstehenden Ansprüche, umfassend eine Antriebsstoß-Identifikationseinheit (20);
wobei die Antriebsstoß-Identifikationseinheit ausgebildet ist zum Identifizieren eines Antriebsstoßes (i) auf eine drehbare Welle (2), der von einem Wellen-Antriebsstoßgenerator (3) erzeugt wird.

6. Drehmomentwerkzeug nach Anspruch 5,
wobei die Antriebsstoß-Identifikationseinheit (20) ein Körperschallmikrofon (25) umfasst, wobei der Antriebsstoß (i) identifiziert wird, wenn das Körperschallmikrofon ein Körperschallsignal sendet, das einem vorbestimmten Schallkriterium (cs) entspricht;
wobei das vorbestimmten Schallkriterium (cs) auf einer Wechselbeziehung zwischen einer Amplitude des Körperschallsignals und einer Frequenz des Körperschallsignals basieren.

7. Drehmomentwerkzeug nach einem der voranstehenden Ansprüche, umfassend eine Drehmomentbestimmungseinheit (30);
wobei die Drehmomentbestimmungseinheit einen Komparator (35) zum Vergleichen einer ersten Winkelposition der drehbaren Welle zu einem ersten Zeitpunkt (t1) und einer zweiten Winkelposition der drehbaren Welle zu einem zweiten Zeitpunkt (t2) und zum Bestimmen des Drehmoments basierend auf dem Vergleichsergebnis umfasst, wobei der erste Zeitpunkt unmittelbar vor dem identifizierten Antriebsstoß und der zweite Zeitpunkt unmittelbar nach dem identifizierten Antriebsstoß liegt.

8. Drehmomentwerkzeug nach einem der voranstehenden Ansprüche, ferner umfassend eine Bewegungsplausibilitäts-Analyseeinheit (40);
wobei die Bewegungsplausibilitäts-Analyseeinheit ausgebildet ist zum Identifizieren der Plausibilität eines Bewegungssignals der Bewegungssensoranordnung (10) hinsichtlich einer Intensität und einer Dauer des Bewegungssignals; und
wobei die Bewegungsplausibilitäts-Analyseeinheit (40) ausgebildet ist zum Identifizieren der Plausibilität des Bewegungssignals, wenn das Bewegungssignal ein vorgegebenes Bewegungskriterium (cm) erfüllt, wobei das vorgegebene Bewegungskriterium auf einer Wechselbeziehung der Intensität und der Dauer des Bewegungssignals basiert.

9. Drehmomentwerkzeug nach einem der voranstehenden Ansprüche,
wobei die Werkzeugbewegungs-Auswerteeinheit (230) eine Vergleichseinheit (235) umfasst, die ausgebildet ist zum Vergleichen einer erfassten räumlichen Bewegung (211) des Drehmomentwerkzeugs (201) mit einem Werkzeugbewegungsmuster (221), das von der Werkzeugbewegungsmuster-Empfangseinheit (220) empfangen wird; wobei das Werkzeugbewegungsmuster (221) eine vorgegebene Sequenz von Betriebsorten (221a, 221b, 221c) des Drehmomentwerkzeugs (201) darstellt.

10. Drehmomentwerkzeug nach einem der voranstehenden Ansprüche, ferner umfassend eine Datenbank (240) mit einer Mehrzahl von darin gespeicherten Werkzeugbewegungsmustern (221i, 221ii, 221iii), wobei die Datenbank mit der Werkzeugbewegungsmuster-Empfangseinheit (220) wirkverbunden ist, um ein vorgegebenes Werkzeugbewegungsmuster bereitzustellen.

11. Drehmomentwerkzeug nach Anspruch 10,
ferner umfassend eine Empfangseinheit (250), die ausgebildet ist zum Empfangen einer Kennzeichnung, die ein Werkzeugbetriebsmuster (221i, 221ii, 221iii) darstellt, auf dessen Basis das Werkzeugbewegungsmuster (221) aus der Datenbank (240) ausgewählt wird;
wobei die Empfangseinheit (250) ausgebildet ist für den Empfang einer Kennzeichnung, die eine vorbestimmte Reihenfolge von Schrauben oder Muttern darstellt, die zu befestigen sind, um ein Rad (202) an einer Nabe (203) zu montieren, wobei die Kennzeichnung von einem Sender (205) gesendet wird, der zumindest an einem Rad (202) oder zumindest einer Nabe (203) oder zumindest einem Chassis (204) eines Fahrzeugs montiert ist.

12. Drehmomentwerkzeug nach einem der voranstehenden Ansprüche, ferner umfassend eine Betriebsmodus-Erfassungseinheit (260),
wobei die Betriebsmodus-Erfassungseinheit ausgebildet ist zum Erfassen eines Antriebsbetriebsmodus, wobei das Drehmomentwerkzeug ausgebildet ist zum Unterbrechen der Erfassung durch die Bewegungssensoranordnung (10), wenn ein Antriebsbetriebsmodus erfasst wird.

13. Drehmomentwerkzeug nach einem der voranstehenden Ansprüche, ferner umfassend eine Warnanzeige (270),
wobei das Drehmomentwerkzeug ausgebildet ist zum Warnen eines Benutzers, dass der Benutzer mit einer tatsächlichen Reihenfolge von Betriebsorten von der vorgegebenen Reihenfolge von Betriebsorten abgewichen ist.

14. Drehmomentwerkzeug nach einem der voranstehenden Ansprüche, ferner umfassend einen Betriebsunterbrecher (280),
wobei das Drehmomentwerkzeug ausgebildet ist zum Unterbrechen des Betriebs, wenn bestimmt wird, dass der Benutzer mit einer tatsächlichen Reihenfolge von Betriebsorten von der vorgegebenen Reihenfolge von Betriebsorten abgewichen ist.

## Revendications

1. Outil dynamométrique électrique (201), comprenant :
un agencement de capteur de mouvement (10);
dans lequel l'agencement de capteur de mouvement est fixé mécaniquement à l'outil dynamométrique électrique ;
dans lequel l'agencement de capteur de mouvement est adapté pour détecter un mouvement de l'outil dynamométrique électrique;
**caractérisé en ce qu'**il
comprend en outre une unité de réception de modèle de mouvement d'outil (220); et
une unité d'évaluation de mouvement de l'outil (230);
dans lequel l'unité de réception de modèle de mouvement d'outil est adaptée pour recevoir un modèle de mouvement d'outil prédéterminé (221),
dans lequel l'unité d'évaluation de mouvement de l'outil est adaptée pour évaluer si le mouvement spatial détecté de l'outil dynamométrique électrique correspond au modèle de mouvement de l'outil reçu et pour communiquer le résultat de l'évaluation.

2. Outil dynamométrique électrique selon la revendication 1,
dans lequel l'agencement de capteur de mouvement est adapté pour détecter un mouvement de rotation de l'outil dynamométrique électrique autour d'un axe de rotation.

3. Outil dynamométrique électrique selon la revendication 1 ou 2,
dans lequel l'agencement de capteur de mouvement est adapté pour détecter un mouvement spatial de l'outil dynamométrique électrique;
dans lequel le mouvement spatial de l'outil dynamométrique électrique est un mouvement libre dans l'espace le long d'un ou plusieurs axes dans un espace tridimensionnel.

4. Outil dynamométrique électrique selon l'une quelconque des revendications précédentes,
dans lequel l'agencement de capteur de mouvement comprend au moins un élément du groupe constitué d'un capteur d'accélération (11) et d'un gyroscope (12).

5. Outil dynamométrique électrique selon l'une quelconque des revendications précédentes,
comprenant une unité d'identification d'impact d'entraînement (20); dans lequel l'unité d'identification d'impact d'entraînement est adaptée pour identifier un impact d'entraînement (i) sur un arbre rotatif (2) généré par un générateur d'impact d'entraînement d'arbre (3).

6. Outil dynamométrique électrique selon la revendication 5,
dans lequel l'unité d'identification d'impact d'entraînement (20) comprend un microphone à son solidien (25), dans lequel l'impact d'entraînement (i) est identifié lorsque le microphone à son solidien détecte un signal sonore solidien répondant à un critère sonore prédéterminé (cs);
dans lequel le critère sonore prédéterminé (cs) est basé sur une interrelation d'une amplitude du signal sonore solidien et d'une fréquence du signal sonore solidien.

7. Outil dynamométrique électrique selon l'une quelconque des revendications précédentes,
comprenant une unité de détermination de couple (30);
dans lequel l'unité de détermination de couple (30) comprend un comparateur (35) pour comparer une première position angulaire de l'arbre rotatif à un premier instant (t1) et une seconde position angulaire de l'arbre rotatif à un second instant (t2) et pour déterminer le couple sur la base du résultat de la comparaison, le premier instant étant immédiatement avant l'impact d'entraînement identifié et le second instant étant immédiatement après l'impact d'entraînement identifié.

8. Outil dynamométrique électrique selon l'une quelconque des revendications précédentes,
comprenant en outre une unité d'analyse de plausibilité de mouvement (40);
dans lequel l'unité d'analyse de plausibilité de mouvement est adaptée pour identifier la plausibilité d'un signal de mouvement de l'agencement de capteur de mouvement (10) par rapport à une intensité et une durée du signal de mouvement; et
dans lequel l'unité d'analyse de plausibilité de mouvement (40) est adaptée pour identifier la plausibilité du signal de mouvement lorsque le signal de mouvement répond à un critère de mouvement prédéterminé (cm), dans lequel le critère de mouvement prédéterminé est basé sur une interrelation entre l'intensité et la durée du signal de mouvement.

9. Outil dynamométrique électrique selon l'une quelconque des revendications précédentes,
dans lequel l'unité d'évaluation de mouvement d'outil (230) comprend une unité de comparaison (235) adaptée pour comparer un mouvement spatial détecté (211) de l'outil dynamométrique électrique (201) selon un modèle de mouvement d'outil (221) reçu par l'unité de réception de modèle de mouvement d'outil (220) ;
dans lequel le modèle de mouvement d'outil (221) représente une séquence prédéterminée d'emplacements d'opération (221a, 221b, 221c) de l'outil dynamométrique électrique (201).

10. Outil dynamométrique électrique selon l'une quelconque des revendications précédentes,
comprenant en outre une base de données (240) ayant mémorisé une pluralité de modèles de mouvement d'outil (221i, 221ii, 221ii, 221iiiii), dans lequel la base de données est connectée de manière opérationnelle à l'unité de réception de modèle de mouvement d'outil (220) pour fournir un modèle de mouvement d'outil prédéterminé.

11. Outil dynamométrique électrique selon la revendication 10,
comprenant en outre une unité réceptrice (250) adaptée pour recevoir une identification représentant un modèle de fonctionnement d'outil (221i, 221ii, 221iiiii), sur la base de laquelle le modèle de mouvement d'outil (221) est sélectionné dans la base de données (240);
dans lequel l'unité réceptrice (250) est adaptée pour recevoir une identification représentant une séquence prédéterminée de vis ou d'écrous à fixer pour monter une roue (202) sur un moyeu (203), l'identification étant envoyée par un émetteur (205) monté sur au moins une roue (202), un moyeu (203) et un châssis (204) de véhicule.

12. Outil dynamométrique électrique selon l'une quelconque des revendications précédentes,
comprenant en outre une unité de détection de mode de fonctionnement (260),
dans lequel l'unité de détection de mode de fonctionnement est adaptée pour détecter un mode de fonctionnement d'entraînement, l'outil dynamométrique électrique étant adapté pour interrompre la détection de l'agencement de capteur de mouvement (10) quand un mode de fonctionnement d'entraînement est détecté.

13. Outil dynamométrique électrique selon l'une des revendications précédentes,
comprenant en outre un indicateur d'alerte (270),
l'outil dynamométrique électrique étant adapté pour avertir un utilisateur que l'utilisateur s'est écarté avec une séquence réelle d'emplacements d'opération de la séquence prédéterminée d'emplacements d'opération.

14. Outil dynamométrique électrique selon l'une des revendications précédentes,
comprenant en outre un interrupteur de fonctionnement (280), l'outil dynamométrique électrique étant adapté pour interrompre le fonctionnement lorsqu'il est évalué que l'utilisateur s'est écarté d'une séquence réelle d'emplacements d'opération par rapport à la séquence prédéterminée d'emplacements d'opération.
